# EUROPÄISCHE PATENTSCHRIFT

(11) **EP 0 502 527 B1**
(45) Veröffentlichungstag und Bekanntmachung des Hinweises auf die Patenterteilung: **01.02.1995**
(21) Anmeldenummer: 92103783.4
(22) Anmeldetag: 05.03.1992
(51) Int. Cl.: F16D 13/68, F16F 15/12

(54) **Kupplungsscheibe für eine Kraftfahrzeug-Reibungskupplung**
Clutch disc for a friction clutch of an automotive vehicle
Disque pour embrayage à friction de véhicule automobile

(30) Priorität: 06.03.1991 DE 4107125
(43) Veröffentlichungstag der Anmeldung: 09.09.1992
(73) Patentinhaber: Fichtel & Sachs AG, D-97419 Schweinfurt (DE)
(72) Erfinder: Feldhaus, Reinhard, Dipl.-Ing., W-8735 Ebenhausen (DE); Fischer, Matthias, Dipl.-Ing. (FH), W-8735 Eltingshausen (DE); Jeppe, Harald, Dipl.-Ing. (FH), W-8720 Schweinfurt (DE)
(74) Vertreter: Liska, Horst, Dr.-Ing.

(56) Entgegenhaltungen:
- FR-A- 2 558 907
- FR-A- 2 614 080
- FR-A- 2 642 804
- US-A- 4 890 712

## Beschreibung

Die Erfindung betrifft eine Kupplungsscheibe für eine Kraftfahrzeug-Reibungskupplung und inbesondere eine Kupplungsscheibe mit einem Drehschwingungsdämpfer, dem eine Reibeinrichtung zugeordnet ist.

Aus der DE-A-36 16 163 (entsprechend den US-Patenten 4 700 822 und 4 890 712) ist eine Kupplungsscheibe für eine Kraftfahrzeug-Reibungskupplung bekannt, an deren mit der Getriebeeingangswelle zu kuppelnden Nabe zwei in axialem Abstand voneinander angeordnete, durch Nieten fest miteinander verbundene Seitenscheiben eines für den Lastbetrieb bemessenen Last-Schwingungsdämpfers drehbar gelagert sind. Axial zwischen den beiden Seitenscheiben, von denen eine zugleich die Kupplungsreibbeläge trägt, ist eine Nabenscheibe angeordnet, die über eine Verzahnung mit einem begrenzten Drehspiel, ansonsten jedoch drehfest mit der Nabe verbunden ist. Für den Lastbetrieb bemessene Lastfedern kuppeln die das Eingangsteil des Lastdämpfers bildenden Seitenscheiben drehelastisch mit der das Ausgangsteil des Lastdämpfers bildenden Nabenscheibe. Axial zwischen einer der beiden Seitenscheiben und der Nabenscheibe ist ein für den Leerlaufbetrieb bemessener Leerlauf-Drehschwingungsdämpfer untergebracht, dessen Eingangsteil drehfest mit der Nabenscheibe des Last-Drehschwingungsdämpfer gekuppelt ist und dessen Ausgangsteil drehfest auf der Nabe sitzt. Für den Leerlaufbetrieb bemessene Federn kuppeln das Eingangsteil und das Ausgangsteil des Leerlauf-Drehschwingungsdämpfers drehelastisch miteinander.

Das Eingangsteil des Leerlauf-Drehschwingungsdämpfers ist als mehrteiliges Kunststoff-Formteil ausgebildet und hat eine Reibfläche, mit der es an der einen Seitenscheibe anliegt. Zwischen der anderen Seitenscheibe des Last-Drehschwingungsdämpfers und der Nabenscheibe ist eine Tellerfeder eingespannt, die die Reibfläche des Eingangsteils des Leerlaufdämpfers gegen die eine Seitenscheibe drückt, so daß eine für den Lastbetriebe bemessene Reibeinrichtung entsteht.

Es ist Aufgabe der Erfindung eine Kupplungsscheibe mit einem insbesondere für den Lastbetrieb bemessenen Drehschwingungsdämpfer anzugeben, dessen Reibeinrichtung einfach aufgebaut und leicht zu montieren ist sowie besonders betriebssicher ist.

Die Erfindung geht von einer Kupplungsscheibe für eine Kraftfahrzeug-Reibungskupplung aus, umfassend folgende Komponenten:
- eine Nabe, die eine Drehachse definiert,
- einen Drehschwingungsdämpfer mit einem Eingangsteil, einem relativ zum Eingangsteil um die Drehachse verdrehbaren, mit der Nabe in Drehmoment übertragender Weise verbundenen Ausgangsteil und mehreren, das Eingangsteil drehelastisch mit dem Ausgangsteil kuppelnden Federn, wobei die Federn in Fenstern eines ersten Scheibenteils angeordnet sind und in Fenster von zwei axial beiderseits des ersten Scheibenteils angeordneten, fest miteinander verbundenen zweiten Scheibenteilen eingreifen,
- eine Reibeinrichtung mit einem axial zwischen dem ersten und einem der zweiten Scheibenteile angeordneten Reibring, der mit einer Reibfläche am ersten Scheibenteil anliegt und axial in Öffnungen des einen der beiden zweiten Scheibenteile eingreifende Nasen aufweist, die den Reibring drehfest, aber axial beweglich an dem einem der beiden zweiten Scheibenteile führen und mit einer den Reibring axial federnd gegen das erste Scheibenteil spannenden Tellerfeder,
- an dem Eingangsteil gehaltene Kupplungsreibbeläge.

Bei einer solchen Kupplungsscheibe ist erfindungsgemäß vorgesehen, daß die Tellerfeder axial zwischen dem einen der beiden zweiten Scheibenteile und dem Reibring angeordnet ist und von ihrem ringförmig geschlossenen Federkörper angenähert radial abstehende Federzungen aufweist, die mit ihren Enden am Reibring anliegen, während der Federkörper mit seinem den Federzungen radial abgewandten Rand an dem einen der beiden Scheibenteile anliegt und daß jede Nase des Reibrings durch einen Zwischenraum zwischen einem Paar benachbarter Federzungen hindurchreicht. Die Anordnung der Tellerfeder zwischen dem genannten Scheibenteil und dem Reibring erlaubt eine einache und sichere Montage, da die Tellerfeder vor der Montage des Reibrings auf diesen aufgesetzt und dort definiert fixiert werden kann. Darüber hinaus benötigen die Tellerfeder und der Reibring nur einen vergleichsweise geringen radialen Bauraum, da sie sich in radialer Richtung überlappen.

Die Anzahl der Federzungen beträgt zweckmäßigerweise ein geradzahliges Vielfaches der Anzahl der Nasen, wobei bevorzugt einerseits die Federzungen voneinander und andererseits die Nasen voneinander jeweils gleiche Winkelabstände voneinander haben, um für eine gleichmäßige axiale Krafteinleitung zu sorgen.

Der Reibring weist einen die Reibfläche bildenden Ringkörper auf, wobei die Nasen bevorzugt eine kleinere radiale Erstreckung haben als der Ringkörper und ungefähr in der Mitte der radialen Erstreckung des Ringkörpers angeordnet sind. Hierdurch wird erreicht, daß zum einen die Federzungen mittig an dem Ringkörper angreifen und zum anderen ragt der Federkörper der Tellerfeder nur geringfügig radial über den Reibring hinaus.

Zur Minderung des Verschleisses zwischen Federzungen und Reibring in Umfangsrichtung, weist der Reibring auf seiner der Reibfläche axial abgewandten Seite seines die Reibfläche bildenden Ringkörpers in Umfangsrichtung im Abstand angeordnete Vertiefungen auf, in die die Federzungen eingreifen. Die in Umfangsrichtung gelegenen Kanten der Vertiefungen nehmen hierbei die Federzungen im wesentlichen ohne Spiel in Umfangsrichtung zwischen sich auf. Insbesondere wenn die Vertiefungskanten zumindest im Bereich der Enden der Federzungen parallel zu den an ihnen anliegenden Begrenzungskanten der Federzungen verlaufen, ist sichergestellt, daß sich die Federzungen in Umfangsrichtung nicht in das Material der Nasen einarbeiten können, wenn bei Drehschwingungen die Tellerfeder aufgrund ihrer Trägheit ein Drehmoment auf den Reibring ausübt.

Die Vertiefungen in dem Reibring können radial begrenzt sein, erstrecken sich jedoch zweckmäßigerweise über die gesamte radiale Höhe des Ringkörpers des Reibrings in Form radialer Nuten.

Die Begrenzungskanten jeder einzelnen Federzunge verlaufen in einer bevorzugten Ausgestaltung zueinander in einem spitzen Winkel, während die in Umfangsrichtung sich gegenüberliegenden Begrenzungskanten zweier benachbarten Federzungen zueinander parallel verlaufen. Auf diese Weise können die Nasen des Reibrings als relativ massive rechteckige Blöcke ausgebildet werden.

In einer weiteren bevorzugten Ausgestaltung weist der Reibring an seinem Innenumfang verteilt mehrere axial abstehende, federnde Klammern oder Rastarme auf, die durch Öffnungen des einen der beiden zweiten Scheibenteile reichen und mit einer an ihren der Reibfläche fernen Enden angeformten, axialen Anschlagkante eine Begrenzungskante des einen der beiden zweiten Scheibenteile oder eines in das eine zweite Scheibenteil eingesetzten Bauteils hintergreifen. Die Klammern erlauben es, die Tellerfeder und den Reibring an dem zweiten Scheibenteil vorzumontieren, was die Montage der verbleibenden Komponenten der Kupplungsscheibe erleichtert. Der axiale Abstand der Anschlagkante der Klammer von der Reibfläche ist hierbei zweckmäßigerweise größer als der axiale Abstand der Begrenzungskanten von der Reibfläche, um auch bei betriebsmäßigem Verschleiß eine sichere Anlage des Reibrings an dem ersten Scheibenteil sicherzustellen.

Eine weitere Montagevereinfachung ergibt sich, wenn jede Klammer an ihrem der Reibfläche fernen Ende eine Einfädelschräge aufweist, die die Anschlagkante beim axialen Aufstecken des Reibrings während der Montage über die Begrenzungskante hebt. Selbst wenn eine Vielzahl Klammern vorgesehen ist, muß der Reibring damit nur axial, gegebenenfalls gegen die Kraft der Tellerfeder auf das zweite Scheibenteil aufgesteckt werden.

Im Prinzip können die an dem Reibring vorgesehenen Klammern für die Rastverbindung entweder radial oder auch in Umfangsrichtung ausgelenkt werden. Radial federnde Klammern werden jedoch bevorzugt, da sie zugleich für eine Zentrierung des Reibrings an dem Scheibenteil sorgen. Zur besseren Ausnutzung des Bauraums sind die Nasen und die Klammern zweckmäßigerweise in Umfangsrichtung gegeneinander versetzt.

Speziell bevorzugt sind radial federnde Klammern mit nach radial innen abstehender Anschlagkante, wenn in eine zentrische Öffnung des genannten einen der beiden zweiten Scheibenteile ein Führungsring axial fest eingesetzt ist, der die Begrenzungskante bildet. Der Führungsring führt die beiden fest miteinander verbundenen zweiten Scheibenteile radial an der Nabe und hat damit eine Doppelfunktion, indem er zum einen das Eingangsteil und das Ausgangsteil des Drehschwingungsdämpfers radial aneinander führt und zum anderen den Reibring und die Tellerfeder während der Montage axial fixiert.

In einer zweckmäßigen Ausgestaltung hat der Führungsring im Bereich seines Außenumfangs eine L-förmige Querschnittsform, die durch eine in die zentrische Öffnung eingreifende Mantelfläche und einen radial abstehenden, an der Innenfläche des zweiten Scheibenteils anliegenden Flansch gebildet wird. Vor dem Flansch stehen in Umfangsrichtung verteilt und gegen die Klammern versetzt weitere Klammern bzw. Rastarme ab, die in Umfangsrichtung federnd ausgebildet sind und paarweise durch die den Nasen zugeordneten Öffnungen des zweiten Scheibenteils greifen sowie mit an ihren Enden angeordneten Haltekanten das zweite Scheibenteil auf dessen Außenfläche hintergreifen. Auf diese Weise wird der Führungsring für sich in der einfach herstellbaren zentrischen Öffnung des zweiten Scheibenteils radial geführt und durch die Klammern axial gehalten. Einfädelschrägen an den Enden der weiteren Klammern sorgen dafür, daß der Führungsring bei der Montage problemlos auf das zweite Scheibenteil aufgeschnappt werden kann. Der axiale Abstand der Haltekante jeder weiteren Klammer vom Flansch ist zur axial spielfreien Befestigung des Führungsrings gleich der Dicke des zweiten Scheibenteils gewählt.

Bei dem Reibring handelt es sich bevorzugt um ein integrales Kunststoff-Formteil. Die Erfindung wird bevorzugt bei solchen Kupplungsscheiben eingesetzt, bei welchen ein für den Leerlaufbetrieb bemessener Drehschwingungsdämpfer auf der dem Reibring axial abgewandten Seite des ersten Scheibenteils axial zwischen dem ersten Scheibenteil und dem anderen der beiden zweiten Scheibenteile angeordnet ist, und zwar so, daß sich der Abstützkraftweg der Tellerfeder über den Leerlaufschwingungsdämpfer schließt. Bevorzugt sind hierbei Ausgestaltungen, bei welchen auch zumindest die im Abstützkraftweg liegenden Komponenten des Leerlaufschwingungsdämpfers aus Kunststoffmaterial hergestellt sind, so daß sie mit zur Reibkrafterzeugung der Last-Reibeinrichtung ausgenutzt werden können.

Im foglenden wird die Erfindung anhand einer Zeichnung näher erläutert. Hierbei zeigt:
- Figur 1: einen Axiallängsschnitt durch ein Ausführungsbeispiel einer Kupplungsscheibe gemäß der Erfindung;
- Figur 2: eine Detailansicht eines Reibrings mit aufgesetzter Tellerfeder einer Reibeinrichtung der Kupplungsscheibe;
- Figur 3: eine Schnittansicht durch die Reibeinrichtung, gesehen entlang einer Linie III-III in Figur 2;
- Figur 4: eine Schnittansicht durch die Reibeinrichtung, gesehen entlang einer Linie IV-IV in Figur 2;
- Figur 5 und 6: Detailansichten aus Figur 1;
- Figur 7: eine teilweise geschnittene Radialansicht eines Führungsrings, gesehen entlang einer Linie VII-VII in Figur 6;
- Figur 8: eine Axialansicht einer Seitenscheibe der Kupplungsscheibe aus Figur 1 und
- Figur 9: eine Detailansicht einer Variante der Kupplungsscheibe.

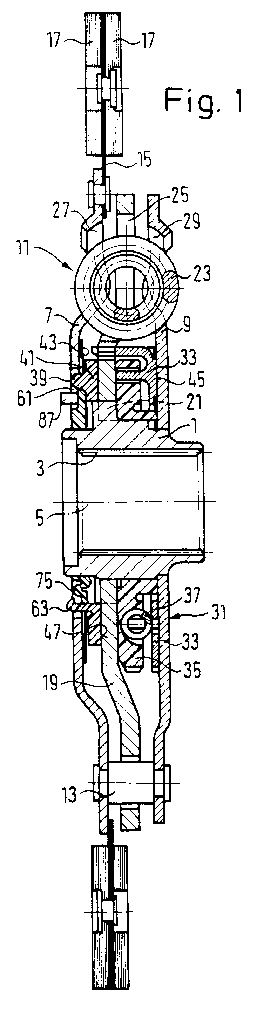

Fig. 1 zeigt den Gesamtaufbau einer Kupplungsscheibe gemäß der Erfindung. Die Kupplungsscheibe umfaßt eine Nabe 1 mit einer Innennverzahnung 3, über die die Nabe 1 drehfest, aber axial verschiebbar, mit einer nicht dargestellten Getriebe-Eingangswelle gekuppelt werden kann. Die Getriebewelle und sämtliche Einzelteile der Kupplungsscheibe sind zu einer Drehachse 5 konzentrisch angeordnet. An der Nabe 1 sind Seitenscheiben 7, 9 eines für den Lastbetrieb bemessenen Last-Drehschwingungsdämpfer 11 drehbar gelagert. Die im axialen Abstand voneinander angeordneten Seitenscheiben 7, 9 sind durch Abstandnieten 13 fest miteinander verbunden. An der Seitenscheibe 7 sind über eine Mitnehmerscheibe 15 Kupplungsreibbeläge 17 befestigt. Axial zwischen den Seitenscheiben 7, 9 ist eine Nabenscheibe 19 angeordnet, die über eine Verzahnung 21 an ihrem Innenumfang drehfest, jedoch mit einem vorbestimmten Drehspiel, mit der Nabe 1 gekuppelt ist. Der Lastdämpfer 11 umfaßt mehrere, in Umfangsrichtung verteilt angeordnete, für den Lastbetrieb bemessene Schraubenfedern 23, die die Seitenscheiben 7, 9 drehelastisch mit der Nabenscheibe 19 kuppeln. Fig. 1 zeigt lediglich eine der Federn 23, die jeweils in einem Fenster 25 der Nabenscheibe 19 und axial dazu fluchtenden Fenstern 27, 29 der Seitenscheiben 7, 9 sitzen.

Die Kupplungsscheibe umfaßt in dem Bauraum einerseits radial zwischen der Nabe 1 und dem Anordnungsbereich der Lastfedern 23 und andererseits axial zwischen der Nabenscheibe 19 und der Seitenscheibe 9 einen für den Leerlaufbetrieb bemessenen Leerlauf-Drehschwingungsdämpfer 31, dessen Eingangsteil 33 drehfest mit der Nabenscheibe 19 gekuppelt ist und dessen Ausgangsteil 35 drehfest auf der Nabe 1 mittels einer Verzahnung gehalten ist. Für den Leerlaufbetrieb bemessene Schraubenfedern 37 kuppeln das Eingangsteil 33 drehelastisch mit dem Ausgangsteil 35. Der Leerlaufdämpfer 31 ist hierbei innerhalb des Drehspiels der Verzahnung 21 bei einer Relativdrehung der Nabenscheibe 19 relativ zur Nabe 1 wirksam.

Auf der dem Leerlaufdämpfer 31 axial abgewandten Seite der Nabenscheibe 19 ist axial zwischen der Nabenscheibe 19 und der Seitenscheibe 7 ein mit der Seitenscheibe 7 über mehrere, in Umfangsrichtung verteilt angeordnete, axial abstehende Nasen 39 drehfest, aber axial beweglich gekuppelter Reibring 41 vorgesehen, der von einer zwischen dem Reibring 41 und der Seitenscheibe 7 angeordneten Tellerfeder 43 gegen die Nabenscheibe 19 gespannt wird. Die Nabenscheibe 19 ist zusammen mit dem Eingangsteil 33 axial beweglich an der Nabe 1 geführt, so daß das Eingangsteil 33 mit einer ebenen Reibfläche 45 gegen die Innenseite der Seitenscheibe 9 gespannt wird. Der Reibring 41 hat gleichfalls eine ebene Reibfläche 47, mit der er auf der zur Seitenscheibe 7 weisenden Fläche der Nabenscheibe 19 aufliegt. Der Reibring 41 mit seiner Reibfläche 47 und das Eingangsteil 33 mit seiner Reibfläche 45 bilden zusammen mit der Tellerfeder 43 eine für den Lastbetrieb bemessene Reibeinrichtung, die bei einer Relativdrehung zwischen den Seitenscheiben 7, 9 und der Nabenscheibe 19 im Lastbetrieb wirksam ist.

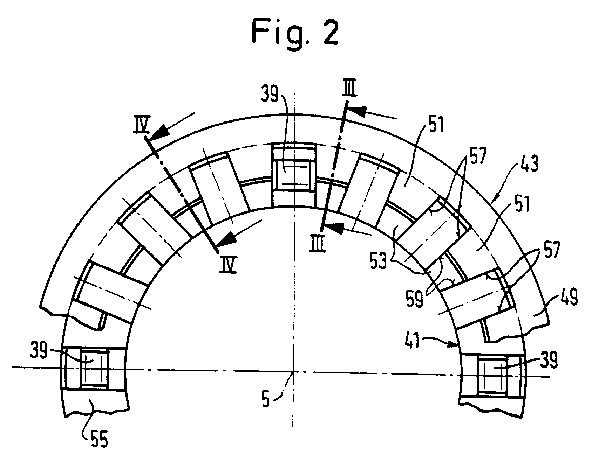

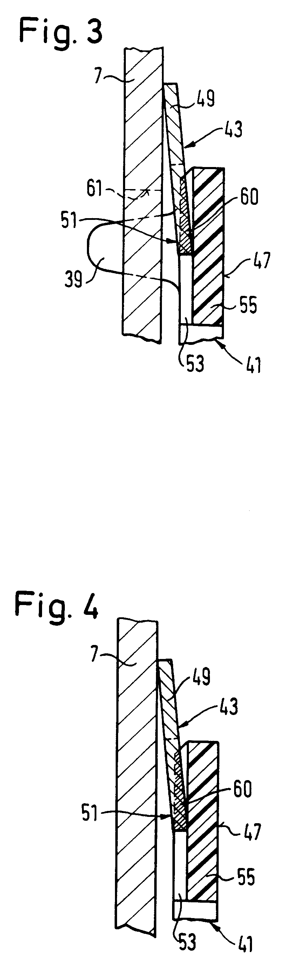

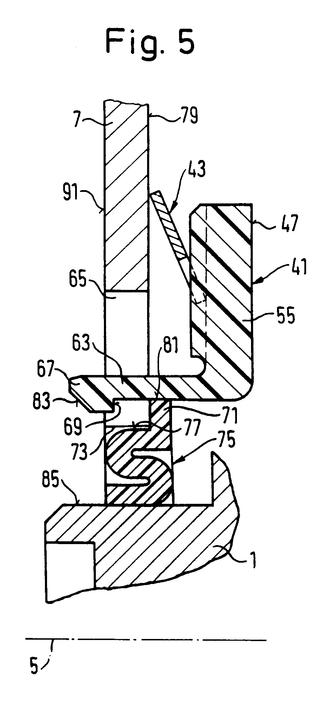

Im folgenden wird die Last-Reibeinrichtung näher erläutert. Fig. 2 zeigt in axialer Draufsicht den Reibring 41 und die Tellerfeder 43. Die Tellerfeder 43 hat einen ringförmigen Grundkörper 49, von dem im dargestellten Ausführungsbeispiel eine Vielzahl in gleichen Abständen angeordneter Federzungen 51 radial nach innen abstehen. Die Federzungen greifen in radiale Nuten eines ringförmigen Grundkörpers 55 des Reibrings 41 ein. Die Nuten 53 erstrecken sich, wie auch die Reibfläche 47 im wesentlichen über die gesamte radiale Höhe des Grundkörpers 55, wie am besten die Figuren 3 und 4 zeigen. Die Figuren 3 und 4 zeigen ferner, daß die nach radial innen abstehenden Federzungen 51 mit ihren Enden am Grund der Nuten 53 aufliegen, während der Federkörper 49 mit seinem Außenumfang an der Seitenscheibe 7 abgestützt ist. Es versteht sich, daß andere Anordnungsweisen ebenfalls möglich sind, insbesondere solche, bei welchen die Federzungen nach radial außen vom Federkörper der Tellerfeder abstehen. Wie Fig. 2 zeigt, haben die Federzungen 51 in einem spitzen Winkel aufeinander zu verlaufende Radialkanten 57, die an parallel verlaufenden Begrenzungskanten 59 der Nuten 53 in Umfangsrichtung im wesentlichen spielfrei anliegen. Die in Umfangsrichtung sich gegenüberliegenden Begrenzungskanten 57 benachbarter Federzungen 51 verlaufen zueinander parallel und bilden Zwischenräume, durch die die Nasen 39 hindurchtreten. Aufgrund der beschriebenen Gestaltung der Federzungen 51 ergeben sich vergleichsweise breite Zwischenräume, so daß die Nasen 39 die Form massiver, in Draufsicht rechteckföriger Klötze erhalten können. Die Zahl der Federzungen 51 ist ein geradzahliges Vielfaches der ebenfalls im gleichen Winkelabständen voneinander angeordneten Nasen 39. Im dargestellten Ausführungsbeispiel sind bei vier Nasen 39 sechzehn Federzungen 51 vorgesehen. Aufgrund der gleichmäßig verteilten Anordnung der Nasen 39 und der Federzungen 51, bei welcher die Nasen 39 durch Zwischenräume zwischen den Federzungen hindurchgreifen, wird der radiale Raumbedarf der Reibeinrichtung gering gehalten und die Kraft der Tellerfeder 43 wird zentrisch in die ringförmige Reibfläche 47 eingeleitet. Nicht zuletzt wird auf diese Weise eine in Umfangsrichtung gleichförmige Anpreßkraftverteilung an der Nabenscheibe 19 erzielt. Da die Federzungen 51 in durch die Nuten 53 gebildete Vertiefungen des Reibrings 41 eingreifen, wird der Abstützbereich zwischen Tellerfeder 43 und Reibring 41 bei im Betrieb auftretenden Torsionsschwingungen und Axialvibrationen weniger belastet und ist geringerem Verschleiß unterworfen. Insbesondere in Umfangsrichtung ergeben sich, wie die Figuren 3 und 4 durch schraffiert eingezeichnete Überlappungsbereiche 60 zeigend, beträchtliche Anlageflächen, durch die ein Verschleiß an dieser Stelle wesentlich vermindert wird.

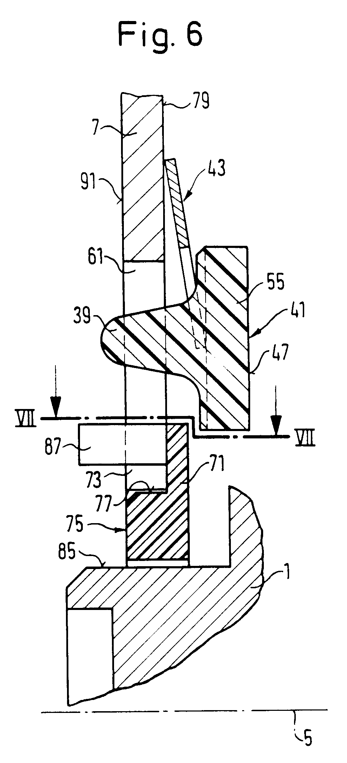

Die den Reibring 41 drehfest, jedoch axial verschiebbar an der Seitenscheibe 7 führenden Nasen 39 greifen, wie Fig. 1 und im Detail Fig. 6 zeigen, in schlitzförmige Aussparungen 61 ein, die in der Seitenscheibe 7 vorgesehen sind. Zur radialen und axialen Fixierung des Reibrings 41, sind an dessen Innenumfang in Umfangsrichtung gegen die Nasen 39 versetzt axial abstehende Rastarme bzw. Klammern 63 angeformt, die durch zugeordnete Aussparungen 65 der Seitenscheibe 7 greifen. Die Klammern 63 sind radial federnd ausgebildet und tragen an ihren der Reibfläche 47 abgewandten freien Enden 67 radial nach innen vorspringende, axial zur Reibfläche 47 weisende Anschlagschultern 69, die einen vor die Aussparung 65 ragenden Flansch 71 eines in eine zentrische Öffnung 73 der Seitenscheibe 7 fest eingesetzten Führungsrings 75 hintergreifen. Der Führungsring 75 besteht aus gleitfähigem Kunststoffmaterial und hat im Bereich seines Außenumfangs L-förmiges Profil, welches mit einer im wesentlichen zylindrischen Umfangsfläche 77 in der zentrischen Öffnung 73 sitzt und von der der Flansch 71 radial absteht. Der Flansch 71 liegt an der Innenfläche 79 der Seitenscheibe 7 an und bildet eine Umfangsfläche 81 an der die Klammern 63 den Reibring 41 radial führen. Der an der Innenfläche 79 der Seitenscheibe 7 anliegende Flansch 71 bildet damit eine Begrenzungskante, die von der Anschlagfläche 69 der Klammer 63 hintergriffen wird.

Am freien Ende 67 der Klammer 63 ist eine nach radial innen hin ansteigende Einfädelschräge 83 vorgesehen, über die die Klammer 63 bei der Montage des Reibrings 41 auf den Flansch 71 aufgeschnappt werden kann. Der axiale Abstand der Anschlagfläche 69 von der Reibfläche 47 ist größer gewählt, als der im Betrieb der Kupplungsscheibe sich einstellende Abstand der Begrenzungskante des Flansches 71 von der Reibfläche 47. Der Reibring 41 und die Tellerfeder 43 können bei der Montage der Kupplungsscheibe an der Seitenscheibe 7 vormontiert werden, was die Gesamtmontage der Kupplungsscheibe vereinfacht. Der Abstand der Anschlagfläche 69 von der Reibfläche 47 ist hierzu so bemessen, daß die Tellerfeder 43 bereits mit leichter Vorspannung gehalten wird, wenn die Anschlagflächen 69 des vormontierten Reibrings 41 an dem Flansch 71 anliegen. Bei fertig montierter Kupplungsscheibe ist die Tellerfeder 43 weitergehend komprimiert und die Anschlagflächen 69 sind, wie in Fig. 5 dargestellt, vom Flansch 71 abgehoben. Die Abstandsdifferenz ist so bemessen, daß sie bei betriebsmäßigem Verschleiß des Reibrings 41 nicht ausgeglichen wird.

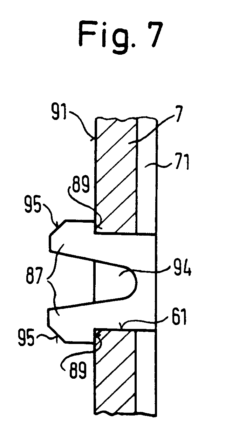

Die Figuren 6 und 7 zeigen Einzelheiten der Befestigung des drehbar auf einen Zylinderabsatz 85 sitzenden Führungsrings 75 an der Seitenscheibe 7. Vom Flansch 71 des Führungsrings 75 stehen in Umfangsrichtung versetzt weitere Rastarme bzw. Klammern 87 axial ab, die paarweise durch die den Nasen 39 des Reibrings 41 zugeordneten Aussparungen 61 der Seitenscheibe 7 hindurchgreifen und mit axialen Anschlagflächen 89 die Aussenseite 91 der Seitenscheibe 7 engpassend hintergreifen. Die Klammern 87 jedes Paars sind durch einen Schlitz 94 voneinander getrennt und sind in Umfangsrichtung federnd ausgebildet. Während die Anschlagflächen 89 voneinander weg verlaufen, sind an den freien Enden der Klammern 87 aufeinander zu sich verjüngende Einfädelschrägen 95 angeformt. Der Führungsring 75 kann damit ebenfalls auf die Seitenscheibe 7 aufgeschnappt werden.

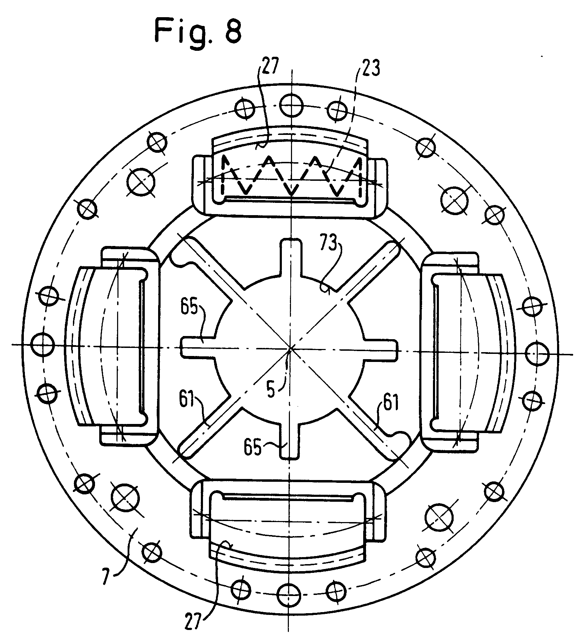

Fig. 8 zeigt Einzelheiten der Seitenscheibe 7 und insbesondere die zentrische Öffnung 73 und die Fenster 27 der Federn 23. Die zur Aufnahme der Nasen 39 und der Klammern 87 vorgesehenen Aussparungen 61 sind als von der zentrischen Öffnung 73 radial ausgehende Schlitze ausgebildet, deren Begrenzungskanten zueinander parallel verlaufen. Die zur Aufnahme der Klammern 63 des Reibrings 41 bestimmten Aussparungen 65 sind ebenfalls als von der Öffnung 73 ausgehende radiale Schlitze mit parallelen Begrenzungskanten ausgebildet, deren radiale Länge jedoch kürzer ist als die der Schlitze 61. Während die Schlitze 61 in Umfangsrichtung zwischen den Fenstern 27 liegen, befinden sich die Schlitze 65 in der Mittelebene der Fenster 27.

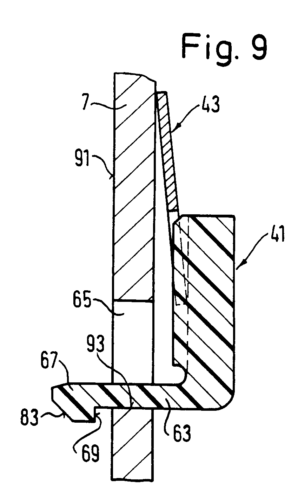

Fig. 9 zeigt eine Variante der Befestigung des Reibrings 41, die sich von der vorstehend erläuternden Ausführungsform nur dadurch unterscheidet, daß die zur Aufnahme der Klammer 63 vorgesehene Aussparung 65 der Seitenscheibe 7 nach radial innen hin durch eine radiale Anlagefläche 93 der Seitenscheibe 7 geschlossen ist, so daß die durch die Aussparung 65 greifende, radial federnde Klammer 63 des Reibrings 41 anstatt an dem Führungsring 75 an der Anlagefläche 93 radial geführt ist. Die axiale Länge der Klammer 63 ist so bemessen, daß ihre axiale Anschlagflächen 69 die äußere Sietenfläche 91 der Seitenscheibe 7 unmittelbar hintergreift. Die Tellerfeder 43 und der Reibring 41 kann damit wiederum, wie bereits erläutert, an der Seitenscheibe 7 vormontiert werden. Der Reibring 41 entspricht im übrigen dem anhand der Figuren 1 bis 8 erläuterten Reibring.

## Patentansprüche

1. Kupplungsscheibe für eine Kraftfahrzeug-Reibungskupplung, umfassend
- eine Nabe (1), die eine Drehachse (5) definiert,
- einen Drehschwingungsdämpfer (11) mit einem Eingangsteil (7, 9), einem relativ zum Eingangsteil (7, 9) um die Drehachse (5) verdrehbaren, mit der Nabe (1) in Drehmoment übertragender Weise verbundenen Ausgangsteil (19) und mehreren, das Eingangsteil (7, 9) drehelastisch mit dem Ausgangsteil (19) kuppelnden Federn (23), wobei die Federn (23) in Fenstern (25) eines ersten Scheibenteils (19) angeordnet sind und in Fenstern (27, 29) von zwei axial beiderseits des ersten Scheibenteils (19) angeordneten, fest miteinander verbundenen, zweiten Scheibenteilen (7, 9) eingreifen,
- eine Reibeinrichtung (41, 43, 45) mit einem axial zwischen dem ersten (19) und einem (7) der zweiten Scheibenteile (7, 9) angeordneten Reibring (41) der mit einer Reibfläche (47) am ersten Scheibenteil (19) anliegt und axial in Öffnungen (61) des einen (7) der beiden zweiten Scheibenteile (7, 9) eingreifende Nasen (39) aufweist, die den Reibring (41) drehfest, aber axial beweglich an dem einen (7) der beiden zweiten Scheibenteile (7, 9) führen und mit einer den Reibring (41) axial federnd gegen das erste Scheibenteil (19) spannenden Tellerfeder (43),
- an dem Eingangsteil (7, 9) gehaltene Kupplungsreibbeläge (17),
dadurch gekennzeichnet,
daß die Tellerfeder (43) axial zwischen dem einen (7) der beiden zweiten Scheibenteile (7, 9) und dem Reibring (41) angeordnet ist und von ihrem ringförmig geschlossenen Federkörper (49) angenähert radial abstehende Federzungen (51) aufweist, die mit ihren Enden am Reibring (41) anliegen, während der Federkörper (49) mit seinem den Federzungen (51) radial abgewandten Rand an dem einen (7) der beiden zweiten Scheibenteile (7, 9) anliegt und daß jede Nase (39) des Reibrings (41) durch einen Zwischenraum zwischen einem Paar in Umfangsrichtung benachbarter Federzungen (51) hindurchreicht.

2. Kupplungsscheibe nach Anspruch 1;
dadurch gekennzeichnet,
daß die Anzahl der Federzungen (51) ein geradzahliges Vielfaches der Anzahl der Nasen (39) beträgt.

3. Kupplungsscheibe nach Anspruch 1 oder 2,
dadurch gekennzeichnet,
daß der Reibring (41) einen die Reibfläche (47) bildenden Ringkörper (55) aufweist und daß die Nasen (39) eine kleinere radiale Erstreckung haben als der Ringkörper (55) und ungefähr in der Mitte der radialen Erstreckung des Ringkörpers (55) angeordnet sind.

4. Kupplungsscheibe nach einem der Ansprüche 1 bis 4,
dadurch gekennzeichnet,
daß der Reibring (41) einen die Reibfläche (47) bildenden Ringkörper (55) aufweist, der auf seiner der Reibfläche (47) axial abgewandten Seite in Umfangsrichtung im Abstand angeordnete Vertiefungen (53) aufweist, in die die Federzungen (51) eingreifen und deren in Umfangsrichtung gelegene Vertiefungskanten (59) die Federzungen (51) im wesentlichen ohne Spiel in Umfangsrichtung zwischen sich aufnehmen.

5. Kupplungsscheibe nach Anspruch 4,
dadurch gekennzeichnet,
daß die Vertiefungskanten (59) zumindest im Bereich der Enden der Federzungen (51) parallel zu den an ihnen anliegenden Begrenzungskanten (57) der Federzungen (51) verlaufen.

6. Kupplungsscheibe nach Anspruch 4 oder 5,
dadurch gekennzeichnet,
daß die Vertiefungen (53) als im wesentlichen über die gesamte radiale Höhe des Ringkörpers (55) sich erstreckende, radiale Nuten ausgebildet sind.

7. Kupplungsscheibe nach Anspruch 5 oder 6,
dadurch gekennzeichnet,
daß die Begrenzungskanten (57) jeder einzelnen Federzunge (51) zueinander in einem spitzen Winkel verlaufen und die in Umfangsrichtung sich gegenüberliegenden Begrenzungskanten (57) zweier benachbarter Federzungen (51) zueinander parallel verlaufen.

8. Kupplungsscheibe nach einem der Ansprüche 1 bis 7,
dadurch gekennzeichnet,
daß der Reibring (41) an seinem Innenumfang verteilt mehrere axial abstehende, federnde Klammern (63) aufweist, die in Öffnungen (65) des einen (7) der beiden zweiten Scheibenteile (7, 9) reichen und mit einer an ihren der Reibfläche (47) fernen Enden (67) angeformten, axialen Anschlagkante (69) eine Begrenzungskante (81; 93) des einen zweiten Scheibenteil (7) oder eines in das eine zweite Scheibenteil (7) eingesetzten Bauteils (75) hintergreifen.

9. Kupplungsscheibe nach Anspruch 8,
dadurch gekennzeichnet,
daß der axiale Abstand der Anschlagkante (69) der Klammer (63) von der Reibfläche (47) größer ist als der axiale Abstand der Begrenzungskante (81; 93) von der Reibfläche (47).

10. Kupplungsscheibe nach Anspruch 8 oder 9,
dadurch gekennzeichnet,
daß jede Klammer (63) an ihrem der Reibfläche (47) fernen Ende (67) eine Einfädelschräge (83) aufweist, die die Anschlagkkante (69) beim axialen Aufstecken des Reibrings (41) während der Montage über die Begrenzungskante (81; 93) hebt.

11. Kupplungsscheibe nach einem der Ansprüche 8 bis 10,
dadurch gekennzeichnet,
daß die Nasen (39) und die Klammern (63) in Umfangsrichtung gegeneinander versetzt sind und daß die Anschlagkkante (69) radial absteht und die Klammer (63) radial federnd ausgebildet ist.

12. Kupplungsscheibe nach Anspruch 8 bis 11,
dadurch gekennzeichnet,
daß die Klammer (63) radial federnd ausgebildet ist und die Anschlagkante (69) nach radial innen absteht und daß in eine zentrische Öffnung (73) des einen (7) der beiden zweiten Scheibenteile (7, 9) ein Führungsring (75) axial fest eingesetzt ist, der die Begrenzungskante (81) bildet.

13. Kupplungsscheibe nach Anspruch 12,
dadurch gekennzeichnet,
daß der Führungsring (75) im Bereich seines Außenumfangs eine L-förmige Querschnittsform hat, die durch eine in die zentrische Öffnung (73) eingreifende Mantelfläche (77) und einen radial abstehenden, an der dem ersten Scheibenteil (19) zugewandten Innenfläche (79) des einen (7) der beiden zweiten Scheibenteile (7, 9) anliegenden Flansch (71) gebildet wird
und daß von dem Flansch (71) in Umfangsrichtung verteilt und gegen die Klammern (63) versetzt weitere in Umfangsrichtung federnde Klammern (87) axial abstehen, die paarweise durch die den Nasen (39) zugeordneten Öffnungen (61) des zweiten Scheibenteils (7) greifen und mit an ihren Enden angeordneten Haltekanten (89) das zweite Scheibenteil (7) auf dessen Außenseite (91) hintergreifen.

14. Kupplungsscheibe nach Anspruch 13,
dadurch gekennzeichnet,
daß die beiden weiteren Klammern (87) jedes Paars durch einen Schlitz (93) voneinander getrennt sind und an ihren Enden mit Einfädelschrägen (95) versehen sind.

15. Kupplungsscheibe nach Anspruch 13 oder 14,
dadurch gekennzeichnet,
daß der axiale Abstand der Haltekante (91) jeder weiteren Klammer (87) vom Flansch (71) gleich der Dicke des einen (7) der beiden zweiten Scheibenteile (7, 9) ist.

16. Kupplungsscheibe nach einem der Ansprüche 1 bis 15,
dadurch gekennzeichnet,
daß der Reibring (41) integral als Kunststoff-Formteil ausgebildet ist.

## Claims

1. Clutch disc for a motor vehicle friction clutch, comprising
- a hub (1) which defines a rotating axis (5);
- a rotary oscillation damper (11) with an input part (7,9), an output part (19) rotatable around the rotating axis (5) relative to the input part (7, 9) and connected with the hub (1) in torque-transmitting manner, and several springs (23) coupling the input part (7, 9) rotationally elastically with the output part (19), the springs (23) being mounted in windows (25) of a first disc part (19) and engaging in windows (27, 29) of two second disc parts (7, 9) mounted axially on both sides of the first disc part (19), and rigidly connected together;
- a friction device (41, 43, 45) with a friction ring (41) mounted axially between the first (19) and one (7) of the second disc parts (7, 9), the said friction ring (41) bearing by means of a friction surface (47) on the first disc part (19) and having, engaging axially into openings (61) of the one (7) of the two second disc parts (7, 9), lugs (39) which guide the friction ring (41) solid in rotation but axially movably on the one (7) of the two second disc parts (7, 9), and with a disc spring (43) tensioning the friction ring (41) axially resiliently against the first disc part (19);
- clutch friction linings (17) held on the input part (7, 9),
characterized in that the disc spring (43) is mounted axially between the one (7) of the two second disc parts (7, 9) and the friction ring (41), and has, protruding approximately radially from its annularly closed spring body (49), flexible tongues (51) which apply with their ends on the friction ring (41), while the spring body (49) applies with its edge radially facing away from the flexible tongues (51) on the one (7) of the two second disc parts (7, 9), and that each lug (39) of the friction ring (41) extends through a space between a pair of flexible tongues (51) adjacent in peripheral direction.

2. Clutch disc according to claim 1, characterized in that the number of the flexible tongues (51) is an even-numbered multiple of the number of lugs (39).

3. Clutch disc according to claim 1 or 2, characterized in that the friction ring (41) has an annular body (55) forming the friction surface (47), and in that the lugs (39) have a smaller radial extension than the annular body (55) and are mounted approximately at the centre of the radial extension of the annular body (55).

4. Clutch disc according to one of claims 1 to 4, characterized in that the friction ring (41) has an annular body (55) forming the friction surface (47) which, on its side axially facing away from the friction surface (47), has recesses (53) spaced in the peripheral direction into which the flexible tongues (51) engage and the recess edges of which (59) situated in the peripheral direction take up said flexible tongues (51) between them substantially without play in the peripheral direction.

5. Clutch disc according to claim 4, characterized in that the recess edges (59), at least in the region of the ends of the flexible tongues (51), run parallel to the defining edges (57) of the flexible tongues (51) adjoining them.

6. Clutch disc according to claim 4 or 5, characterized in that the recesses (53) are designed as radial grooves extending substantially over the entire radial height of the annular body (55).

7. Clutch disc according to claim 5 or 6, characterized in that the defining edges (57) of each individual flexible tongue (51) extend to an acute angle with respect to each other, and the defining edges (57) of two adjacent flexible tongues (51) oppositely situated in the peripheral direction run parallel to each other.

8. Clutch disc according to one of claims 1 to 7, characterized in that the friction ring (41) has, distributed over its inner periphery, several axially protruding resilient clamps (63) which reach into openings (65) of the one (7) of the two second disc parts (7, 9) and by means of one axial stopping edge (69) formed on their ends (67) remote from the friction surface (47) engage from the rear a defining edge (81; 93) of the one second disc part (7) or of a constructional part (75) set into the one second disc part (7).

9. Clutch disc according to claim 8, characterized in that the axial distance of the stop surface (69) of the clamp (63) from the friction surface (47) is greater than the axial distance of the defining edge (81; 93) from the friction surface (47).

10. Clutch disc according to claim 8 or 9, characterized in that each clamp (63) has on its end (67) remote from the friction surface (47) a threading bevel (83) which raises the stopping edge (69) on the axial fitting of the friction ring (41) during assembly over the defining edge (81; 93).

11. Clutch disc according to one of claims 8 to 10, characterized in that the lugs (39) and the clamps (63) are mutually offset in the peripheral direction and in that the stopping edge (69) protrudes radially and the clamp (63) is designed to spring radially.

12. Clutch disc according to claims 8 to 11, characterized in that the clamp (63) is designed to spring radially and the stopping edge (69) protrudes radially inwards, and in that, axially rigidly set into a central opening (73) of the one (7) of the two second disc parts (7, 9), is a guide ring (75) which forms the defining edge (81).

13. Clutch disc according to claim 12, characterized in that the guide ring (75) in the region of its outer periphery, has an L-shaped cross-sectional form which is produced by a shell surface (77) engaging into the central opening (73) and a radially protruding flange (71) applying on the inner surface (79) of the one (7) of the two second disc parts (7, 9) which inner surface faces the first disc part (19), and in that from the flange (71) distributed in the peripheral direction and offset relative to the clamps (63) there protrude axially further clamps (87) springing in the peripheral direction which engage pairwise through the openings (61) of the second disc part (7) associated with the lugs (39) and by means of holding edges (89) mounted on their ends engage the second disc part (7) from the rear on its external side (91).

14. Clutch disc according to claim 13, characterized in that the two further clamps (87) of each pair are separated one from the other by a slit (94) and are provided on their ends with threading bevels (95).

15. Clutch disc according to claim 13 or 14, characterized in that the axial distance of the holding edge (91) of each further clamp (87) from the flange (71) is equal to the thickness of the one (7) of the two second disc parts (7, 9).

16. Clutch disc according to one of claims 1 to 15, characterized in that the friction ring (41) is formed integrally as a plastic moulding.

## Revendications

1. Disque d'embrayage pour un embrayage à friction de véhicule automobile comportant
- un moyeu (1), qui définit un axe de rotation (5),
- un amortisseur d'oscillations de torsion (11) avec une partie d'entrée (7, 9), une partie de sortie (19) tournant par rapport à la partie d'entrée (7, 9) autour de l'axe de rotation (5), reliée au moyeu (1) de manière à transmettre le couple de rotation, ainsi que plusieurs ressorts (23), accouplant la partie d'entrée (7, 9) à la partie de sortie (19) de manière élastique en rotation, les ressorts (23) étant placés dans des fenêtres (25) d'une première partie de disque (19) et s'engageant dans des fenêtres (27, 29) de deux secondes parties de disque (7, 9), reliées fixement entre elles, placées axialement de part et d'autre de la première partie de disque (19),
- un dispositif de friction (41, 43, 45) avec un anneau de friction (41), situé axialement entre la première partie de disque (19) et une (7) des secondes parties de disque (7, 9), qui s'applique avec une surface de friction (47) contre la première partie de disque (19) et qui comporte des ergots (39) s'engageant axialement dans des ouvertures (61) d'une partie (7) des deux secondes parties de disque (7, 9), lesquels ergots guident l'anneau de friction (41) solidaire en rotation, mais mobile axialement contre une (7) des deux secondes parties de disque (7, 9) et avec un ressort Belleville (43) serrant l'anneau de friction (41) axialement, de manière élastique, contre la première partie de disque (19),
- des garnitures de friction d'embrayage (17) fixées sur la partie d'entrée (7, 9),
caractérisé
en ce que le ressort Belleville (43) est placé axialement entre l'une des deux secondes parties de disque (7, 9) et l'anneau de friction (41) et comporte des languettes de ressort (51) faisant saillie radialement, rapprochées de son corps de ressort (49) fermé en anneau, lesquelles languettes s'appliquent avec leurs extrémités contre l'anneau de friction (41), tandis que le corps de ressort (49) s'applique avec son bord, tourné à l'opposé radialement des languettes de ressort (51), contre l'une (7) des deux secondes parties de disque (7, 9) et
en ce que chaque ergot (39) de l'anneau de friction (41) traverse un espace intermédiaire compris entre une paire de languettes de ressort (51), voisine périphériquement.

2. Disque d'embrayage selon la revendication 1, caractérisé en ce que le nombre de languettes de ressort (51) est un multiple pair du nombre d'ergots (39).

3. Disque d'embrayage selon les revendications 1 ou 2, caractérisé en ce que l'anneau de friction (41) comporte un corps (55) formant la surface de friction (47) et en ce que les ergots (39) ont une plus petite extension radiale que le corps annulaire (55) et sont situés approximativement au milieu de l'extension radiale du corps annulaire (55).

4. Disque d'embrayage selon l'une des revendications 1 à 4, caractérisé en ce que l'anneau de friction (41) comporte un corps annulaire (55) formant la surface de friction (47) qui, sur son côté tourné axialement à l'opposé de la surface de friction (47), présente des creux (53) espacés périphériquement, dans lesquels les languettes de ressort (51) s'engagent et dont les bords (59) des creux, situés dans la direction périphérique, logent entre eux périphériquement les languettes de ressort (51), pratiquement sans jeu.

5. Disque d'embrayage selon la revendication 4, caractérisé en ce que les bords (59) des creux sont parallèles, au moins dans la région des extrémités des languettes de ressort (51), aux bords de délimitation (57), s'appliquant contre eux, des languettes de ressort (51).

6. Disque d'embrayage selon les revendications 4 ou 5, caractérisé en ce que les creux (53) sont des rainures radiales s'étendant sensiblement sur toute la hauteur radiale du corps annulaire (55).

7. Disque d'embrayage selon les revendications 5 ou 6, caractérisé en ce que les bords de délimitation (57) de chaque languette de ressort (51) forment entre eux un angle aigu et les bords de délimitation (57), opposés l'un à l'autre périphériquement, de deux languettes de ressort (51) voisines, sont parallèles entre eux.

8. Disque d'embrayage selon l'une des revendications 1 à 7, caractérisé en ce que l'anneau de friction (41) présente, réparties sur son pourtour intérieur, plusieurs agrafes (63) élastiques, faisant saillie axialement, qui s'engagent dans des ouvertures (65) de l'une (7) des deux secondes parties de disque (7, 9) et avec un bord de butée (69) axial, formé à leurs extrémités (67) éloignées de la surface de friction (47), passent derrière un bord de délimitation (81 ; 93) d'une seconde partie de disque (7) ou d'un composant (75) placé dans une seconde partie de disque (7).

9. Disque d'embrayage selon la revendication 8, caractérisé en ce que la distance axiale entre le bord de butée (69) de l'agrafe (63) et la surface de friction (47) est supérieure à la distance axiale entre le bord de délimitation (81 ; 93) et la surface de friction (47).

10. Disque d'embrayage selon les revendications 8 ou 9, caractérisé en ce que chaque agrafe (63) présente, à son extrémité (67) éloignée de la surface de friction (47), une partie oblique d'enfilage (83), qui soulève le bord de butée (69) lors de l'emmanchement axial de l'anneau de friction (41) pendant le montage, sur le bord de délimitation (81 ; 93).

11. Disque d'embrayage selon l'une des revendications 8 à 10, caractérisé en ce que les ergots (39) et les agrafes (63) sont décalés les uns par rapport aux autres dans la direction périphérique et en ce que le bord de butée (69) fait saillie radialement et l'agrafe (63) est élastique radialement.

12. Disque d'embrayage selon les revendications 8 à 11, caractérisé en ce que l'agrafe (63) est élastique radialement et le bord de butée (69) fait saillie radialement vers l'intérieur et en ce que, dans une ouverture (73) centrale de l'une (7) des deux secondes parties de disque (7, 9), est inséré axialement et fixement un anneau de guidage (75), qui forme le bord de délimitation (81).

13. Disque d'embrayage selon la revendication 12, caractérisé en ce que l'anneau de guidage (75) présente une section transversale en L, dans la région de son pourtour extérieur, qui est formée par une surface d'enveloppe (77), s'engageant dans l'ouverture centrale (73), et par une bride (71) faisant saillie radialement, s'appliquant contre la surface intérieure (79), tournée vers la première partie de disque (19), de l'une (7) des deux secondes parties de disque (7, 9) et en ce que de la bride (71) font saillie axialement d'autres agrafes (87), élastiques périphériquement, réparties dans la direction périphérique et décalées par rapport aux agrafes (63), qui s'engagent par paires à travers les ouvertures (61), associées aux ergots (39), de la seconde partie de disque (7) et qui, avec des bords de retenue (89), placés à leurs extrémités, passent derrière la seconde partie de disque (7), sur son côté extérieur (91).

14. Disque d'embrayage selon la revendication 13, caractérisé en ce que les deux autres agrafes (87) de chaque paire sont séparées l'une de l'autre par une fente (93) et sont pourvues, à leurs extrémités, de parties obliques d'enfilage (95).

15. Disque d'embrayage selon les revendications 13 ou 14, caractérisé en ce que la distance axiale du bord de retenue (91) de chaque autre agrafe (87) par rapport à la bride (71) est égale à l'épaisseur de l'une (7) des deux secondes parties de disque (7, 9).

16. Disque d'embrayage selon l'une des revendications 1 à 15, caractérisé en ce que l'anneau de friction (41) est intégralement une pièce moulée en matière plastique.
